# EUROPÄISCHE PATENTANMELDUNG

(11) **EP 1 174 819 A2**
(43) Veröffentlichungstag der Anmeldung: **23.01.2002**
(21) Anmeldenummer: 01111364.4
(22) Anmeldetag: 09.05.2001
(51) Int. Cl.: G06K 19/06

(54) **Informationsträger**

(30) Priorität: 18.07.2000 DE 10034856
(71) Anmelder: HSM Holographic Systems München GmbH, 85652 Ottersberg (DE)
(72) Erfinder: Dausmann, Günther, 85435 Erding (DE); Menz, Irina, Dr., 86420 Diedorf (DE); Hochenbleicher, Gerhard, Dr., 82256 Fürstenfeldbruck (DE); Yang, Zishao, Dr., 85435 Erding (DE)
(74) Vertreter: Gossel, Hans K., Dipl.-Ing.

(57) **Zusammenfassung**

Ein Informationsträger besteht aus einer im wesentlichen kreisrunden oder mehrekkigen Scheibe mit mindestens zwei Paaren von zueinander parallelen Seiten, die in jedem Paar einen gleichen Abstand voneinander aufweisen. Um aus einem derartigen Informationsträger gespeicherte Daten mit großer Geschwindigkeit sicher auslesen zu können, ist auf mindestens einer Seite der Scheibe in deren Mittelpunkt oder im Schnittpunkt von zwei sich kreuzenden Symmetrielinien ein Hologramm angeordnet, das sich mit einem rechtwinkelig auf die Seite auftreffenden Referenzstrahl zu einem aus im wesentlichen konzentrischen Kreisen bestehenden Muster rekonstruieren läßt, dessen Achse der Referenzstrahl bildet.

## Beschreibung

Die Erfindung betrifft einen Informationsträger in Form einer im wesentlichen kreisrunden oder mehreckigen Scheibe mit mindestens zwei Paaren von zueinander parallelen Seiten, die in jedem Paar einen gleichen Abstand voneinander aufweisen.

Derartige scheibenförmige Informationsträger sind in unterschiedlichen Ausführungsformen bekannt. Sie können beispielsweise aus Münzen, Wertmarken, Jetons oder Spielmarken bestehen, die einen bestimmten Wert verkörpern. Bei derartigen scheibenförmigen Informationsträgern oder einen Wert verkörpernden Marken besteht das Bedürfnis, die in diesen gespeicherte Information, beispielsweise den in diesen verkörperten Wert, automatisch auslesen zu können.

Aufgabe der Erfindung ist es daher, einen Informationsträger der eingangs angegebenen Art zu schaffen, dessen in diesem gespeicherte Information sich mit großer Geschwindigkeit sicher auslesen läßt.

Erfindungsgemäß wird diese Aufgabe dadurch gelöst, daß auf mindestens einer Seite der Scheibe in deren Mittelpunkt oder im Schnittpunkt von zwei sich kreuzenden Symmertrielinien einen Hologramm angeordnet ist, das sich mit einem rechtwinkelig auf die Seite auftreffenden Referenzstrahl zu einem aus im wesentlichen konzentrischen Kreisen bestehenden Muster rekonstruieren läßt, dessen Achse der Referenzstrahl bildet.

Das rekonstruierte Muster kann beispielsweise auf einer Durchmesserlinie der konzentrischen Kreise gesehen ein Bit-Muster, beispielsweise in Form eines Barcode, darstellen. Durchläuft der scheibenförmige Informationsträger beispielsweise einen auf dessen Durchmesser angepaßten Kanal, befindet sich das auf der mindestens einen Seite angeordnete Hologramm immer im Zentrum der Scheibe, so daß ein auf dieses Zentrum beim Durchlauf der Scheibe treffender Referenzstrahl das Muster rekonstruiert, das dann beispielsweise von einem optoelektronischen Sensor gelesen werden kann. Dieser optoelektronische Sensor kann eine Flächenkamera, besser jedoch ein Zeilensensor sein, der die in den konzentrischen Kreisen gespeicherte Information auf einer Durchmesserlinie ausliest, die nur die konzentrischen Kreise einer Ringseite zu erfassen braucht.

Der Durchmesser des Hologramms, das im Zentrum einer Seite des scheibenförmigen Informationsträgers angeordnet ist, braucht nur etwa punktförmig ausgebildet zu sein und kann beispielsweise einen Durchmesser von 0,5 bis 5 mm aufweisen.

Das Hologramm läßt sich nach den üblichen bekannten Herstellungsverfahren erstellen. Zweckmäßigerweise wird es in Form einers computergenerierten Hologramms hergestellt. Es kann auch ein Volumenhologramm sein. Zweckmäßigerweise ist es jedoch ein Prägehologramm, das sich kostengünstig in großen Stückzahlen herstellen läßt.

Ein Ausführungsbeispiel der Erfindung wird nachstehend anhand der Zeichnung dargestellt, in deren einziger Figur schematisch das aus einem Hologramm mit einem senkrecht einfallenden Laserstrahl rekonstruierte, aus konzentrischen Kreisen unterschiedlicher Stärke bestehende Muster dargestellt ist.

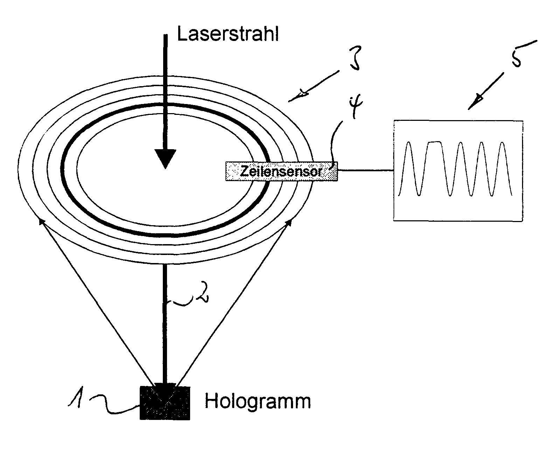

Das Hologramm 1, bei dem es sich um ein Hologramm üblicher Art handelt, ist im Zentrum einer Seite einer Scheibe angeordnet, die kreisrund oder aber mehreckig in der Weise sein kann, daß durch gegenüberliegende Ecken und durch das Zentrum gezogene Linien klappsymmetrische Hälften entstehen. Wird aus dem Hologramm 1 mit einem senkrecht auf dieses auftreffenden Laserstrahl 2 das Objekt 3 rekonstruiert, entstehen zu dem Laserstrahl 2 konzentrische Kreise mit unterschiedlichem Abstand und/oder unterschiedlicher Dicke, so daß die von einer Durchmesserlinie geschnittenen Kreise eine Information, beispielsweise ein Bit-Muster, darstellen, das sich durch einen optischen Sensor, im dargestellten Ausführungsbeispiel durch einen Zeilensensor 4 auslesen läßt. Die von dem Zeilensensor ausgelesene Information ist in dem Diagramm 5 dargestellt. Diese Information kann in bekannter Weise maschinell ausgewertet werden.

Das Hologramm 1 läßt sich am einfachsten mit den gewünschten in den rekonstruierten konzentrischen Kreisen gespeicherten Informationen als computergeneriertes Hologramm herstellen.

Es kann beispielsweise auch in der Weise hergestellt werden, daß das Objekt, also die die Information enthaltenden konzentrischen Kreise, in einer Mattscheibe gespeichert sind, die im Mittelpunkt der konzentrischen, das Objekt bildenden Kreise ein Loch hat. Die Mattscheibe wird sodann mit einem Laserstrahl in der Weise beaufschlagt, daß der Referenzstrahl durch das Loch hindurchtritt und einen Teil des Laserstrahls auf die Mattscheibe trifft, so daß die dadurch entstehenden diffusen Strahlen mit der in der Mattscheibe gespeicherten Information als Objektstrahlen mit dem Referenzstrahl auf dem Hologrammträger interferieren.

Da sich das Hologramm 1 immer auf einer Seite einer kreisrunden oder aber symmetrischen mehreckigen Scheibe befindet, läßt sich die in dem Hologramm gespeicherte Information durch einen senkrecht auf dieses treffenden Referenzstrahl, beispielsweise den Strahl einer Laserdiode, auslesen, wobei wegen der in den konzentrischen Kreisen gespeicherten Information die Winkellage der Scheibe unbeachtlich ist.

## Patentansprüche

1. Informationsträger in Form einer im wesentlichen kreisrunden oder mehreckigen Scheibe mit mindestens zwei Paaren von zueinander parallelen Seiten, die in jedem Paar einen gleichen Abstand voneinander aufweisen,
**dadurch gekennzeichnet,**
**daß** auf mindestens einer Seite der Scheibe in deren Mittelpunkt oder im Schnittpunkt von zwei sich kreuzenden Symmetrielinien ein Hologramm angeordnet ist, das sich mit einem rechtwinkelig auf die Seite auftreffenden Referenzstahl zu einem aus im wesentlichen konzentrischen Kreisen bestehenden Muster rekonstruieren läßt, dessen Achse der Referenzstrahl bildet.

2. Informationsträger nach Anspruch 1, **dadurch gekennzeichnet, daß** das Muster ein Bit-Muster in Form eines Barcode ist.

3. Informationsträger nach Anspruch 1 oder 2, **dadurch gekennzeichnet, daß** der Durchmesser des Hologramms 0,5 bis 5 mm beträgt.

4. Informationsträger nach einem der Ansprüche 1 bis 3, **dadurch gekennzeichnet, daß** das Hologramm ein computergeneriertes Hologramm ist.

5. Informationsträger nach einem der Ansprüche 1 bis 4, **dadurch gekennzeichnet, daß** das Hologramm ein Prägehologramm ist.
